(19) **Europäisches Patentamt**

**European Patent Office**

**Office européen des brevets**

(11) **EP 1 197 736 A2**

(12) **EUROPÄISCHE PATENTANMELDUNG**

(43) Veröffentlichungstag:
17.04.2002  Patentblatt 2002/16

(51) Int Cl.⁷: **G01J 11/00**, G01J 3/457,
H01S 3/109, G02B 27/09

(21) Anmeldenummer: 01250179.7

(22) Anmeldetag: 21.05.2001

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **09.06.2000  DE 10028756**

(71) Anmelder: **Forschungsverbund Berlin e.V.
12489 Berlin (DE)**

(72) Erfinder:
• **Grunwald, Rüdiger Dr.
13187 Berlin (DE)**

• **Griebner, Uwe Dr.
13156 Berlin (DE)**
• **Elsässer, Thomas Prof. Dr.
12355 Berlin (DE)**
• **Kebbel, Volker
28213 Bremen (DE)**
• **Jüptner, Werner Paul Otto Prof. Dr.-Ing.
27721 Ritterhude (DE)**
• **Hartmann, Hans-Jürgen Dr.
23570 Lübeck (DE)**

(74) Vertreter: **Hengelhaupt, Jürgen, Dipl.-Ing. et al
Schützenstrasse 15-17
10117 Berlin (DE)**

(54) **Verfahren und Anordnung zur orts- und zeitaufgelösten interferometrischen Charakterisierung von ultrakurzen Laserimpulsen**

(57)    Die Erfindung betrifft Verfahren und eine Anordnung zur orts- und zeitaufgelösten Charakterisierung von ultrakurzen Laserimpulsen.

Die Aufgabe der Erfindung, gattungsgemäße Verfahren und eine Anordnung zu entwickeln, mit denen die beschriebenen Nachteile des Standes der Technik vermieden werden und mit denen bei einem zugleich kompakten und einfachen Aufbau auf der Basis einer Korrelatortechnik eine zugleich orts- und zeitaufgelöste Messung der Intensität ultrakurzer Laserimpulse im Einzelschußbetrieb erzielt wird, wird dadurch gelöst, dass eine ortsaufgelöste nicht-kollineare Messung der Autokorrelationsfunktion erster oder höherer Ordnung mittels einer Matrix aus strahlformenden Einzelelementen derart vorgenommen wird, dass eine örtliche Aufspaltung des Strahls in eine Strahl-Matrix aus konischen Teilstrahlen erfolgt, wobei jeder Teilstrahl die räumlich integrierte Information über die von ihm durchstrahlte Teilfläche der Matrix repräsentiert, die Ortsauflösung somit durch die Matrixgeometrie bestimmt wird und dass das durch jeden Teilstrahl in einer bestimmten, auf eine Matrixkamera abgebildeten Ebene im Raum erzeugte Interferenzmuster eine Autokorrelationsfunktion erster Ordnung oder unter Ausnutzung nichtlinearer Wechselwirkungen in einem geeigneten Medium entsprechend höherer Ordnung liefert, so dass Kohärenzzeit oder Impulsdauer von einzelnen Laserimpulsen oder Folgen mehrerer Laserimpulse als Funktion des Ortes bestimmt werden können.

Fig. 1

EP 1 197 736 A2

**Beschreibung**

Die Erfindung betrifft Verfahren und eine Anordnung zur orts- und zeitaufgelösten Charakterisierung von ultrakurzen Laserimpulsen gemäß den Ansprüchen 1, 8, 13.

Für Laseranwendungen in den Bereichen Materialbearbeitung, Spektroskopie, Medizin, Sensorik und Messtechnik werden zuverlässige und kompakte Laserquellen benötigt, deren Strahlung in geeigneter Weise geformt bzw. in den Bereich der spezifischen Wechselwirkung gebracht werden muss. Insbesondere bei Kollimation, Fokussierung oder Homogenisierung von Hochleistungslasern müssen Laserkomponenten bzw. komplexe Lasersysteme optimiert oder adaptiv angepasst sowie zur Stabilisierung Störungen ausgeregelt werden.

Neben den spektralen und zeitlichen Profilen sind jeweils auch die zeitlich veränderlichen Intensitäts- und Phasenverteilungen des Wellenpakets als Funktion des Ortes relevante Messgrößen, die von bisher bekannten Anordnungen zur zeitaufgelösten Charakterisierung von Ultrakurzpulslasern im Sub-Pikosekundenbereich typischerweise nicht gemessen wurden [vgl. L. Sarger, J. Oberlé: How to measure the Characteristics of Laser Pulses, in: Claude Rullière: Femtosecond Laser Pulses, Springer-Verlag, Berlin 1998, 177-201].

Während Autokorrelationsmessungen erster Ordnung (Interferometer) nur Aussagen über die Kohärenzlänge des Impulses gestatten, können aus Autokorrelationsfunktionen höherer Ordnung über nichtlinearoptische Wechselwirkungen in guter Näherung auch Aussagen über die Impulsdauer abgeleitet werden. Die Autokorrelationsfunktion zweiter Ordnung kann mit einem Zweiphotonen-Prozess wie beispielsweise der Erzeugung der zweiten Harmonischen (SHG) gewonnen werden.

Die bekannten interferometrischen Messverfahren lassen sich in kollineare und nicht-kollineare Verfahren unterteilen, mit denen Autokorrelationsfunktionen zeitlich sequentiell über optische Weglängenänderung in einem Interferometerarm und zeitintegrierte Detektion der Intensität für unterschiedliche axiale Positionen zweier überlagerter Teil-strahlen oder simultan über Erzeugung konischer oder konisch überlagerter Strahlenbündel und zeitintegrierte Detektion der Intensität für unterschiedliche transversale Positionen im Single-Shot-Verfahren gemessen werden können.

Bei der nicht-kollinearen Anordnung mit achsensymmetrischer Überlagerung ebener Teilwellen entstehen senkrecht zur Ausbreitungsrichtung Interferenzmuster mit einer Raumfrequenz von

$$\nu = \frac{2\sin(\alpha/2)}{\lambda}$$

($\lambda$ = Schwerpunktswellenlänge des Wellenpakets, $\alpha$ = Winkel der Teilstrahlen gegenüber der optischen Achse).

Diese, z.B. von der Herstellung holografischer Gitter her bekannten charakteristischen Interferenzstrukturen, im radialsymmetrischen Fall Ringe, werden typischerweise auf eine CCD-Kamera abgebildet und nur dann aufgelöst, wenn die Vergrößerung des Abbildungssystems und die Größe der Kamera-Pixel dies zulassen.

Daher werden bei vielen verwendeten Anordnungen mit großem Winkel keine Ringe beobachtet, und es erfolgt automatisch eine Mittelung, die anderenfalls per Datenauswertung vorgenommen werden muß.

Die gemittelte Kurve der Intensitätsverteilung entspricht einer Autokorrelationsfunktion, aus der mittels bekannter mathematischer Prozeduren auf die Impulsdauer geschlossen werden kann.

Die einzige bisher bekannt gewordene Anordnung zur ortsaufgelösten Messung verwendet ein aufwendiges und kompliziertes Schema vom Typ eines sogenannten SPIDER (spectral phase interferometry for direct electric-field reconstruction), bei dem eine Ortsauflösung in lediglich einer einzigen Raumrichtung durch die Breite des Spalts einer Spektrometeranordnung erzielt wird, wobei die andere Achse der spektralen Koordinate entspricht [L. Gallmann, D. H. Sutter, N. Matuschek, G. Steinmeyer, U. Keller, C. Iaconis, I. A. Walmsley: Spatially resolved amplitude and phase characterization of ultrashort optical pulses using SPIDER, CLEO 2000, San Francisco 2000, Technical Digest, Paper CFE1, 583-584].

Ein weiterer bekannter, relativ kompakter Aufbau verwendet zur Erzeugung von zwei sich überlagernden, fokussierten Teilstrahlen eine Kombination aus Zylinderlinse und Fresnelschem Biprisma, welches als ein Spezialfall eines Axicons betrachtet werden kann [P. O'Shea, R. Trebino: Extremely simple intensity-and-phase ultrashort-pulse measurement device with no spectrometer, thin crystal, or delay line, CLEO 2000, San Francisco 2000, Technical Digest, Paper CFE6, 587-588].

Ausgenutzt wird dabei die örtliche Aufspaltung des Strahls bei der nichtlinearen Frequenzkonversion in einem dicken SHG-Kristall in Abhängigkeit von der jeweiligen spektralen Komponente. Diese Anordnung ist wellenlängenspezifisch, also nicht universell für beliebige Wellenlängenbereiche einsetzbar, und liefert auch keinerlei örtliche Auflösung. Darüber hinaus erzeugen die verwendeten refraktiven Komponenten aufgrund ihrer Dicke und Dispersion schon vor dem nichtlinear optischen Kristall eine zeitliche Verformung des Impulses, was einen weiteren Nachteil derartiger Anordnungen darstellt.

In der JP-9304189 A2 wird des weiteren eine Anordnung beschrieben, bei der die Kristallebene eines nichtlinearen Kristalls in einem Einzelschuss-Korrelator mit prismatischen Flächen ausgebildet ist, jedoch nur als ein makroskopisches Einzelelement.

Aufgabe der Erfindung ist es, gattungsgemäße Verfahren und eine Anordnung zu entwickeln, mit denen die beschriebenen Nachteile des Standes der Technik vermieden werden und mit denen bei einem zugleich kompakten und einfachen Aufbau auf der Basis einer Korrelatortechnik eine zugleich orts- und zeitaufgelöste Messung der Intensität ultrakurzer Laserimpulse im Einzelschussbetrieb erzielt wird.

Die Aufgabe der Erfindung wird durch Verfahren gemäss den Merkmalen der Ansprüche 1 und 8 und durch eine Anordnung gemäss den Merkmalen des Anspruchs 13 gelöst.

Danach ist das Verfahren in einer ersten Variante dadurch gekennzeichnet, dass zur orts- und zeitaufgelösten Charakterisierung von ultrakurzen Laserimpulsen eine ortsaufgelöste nicht-kollineare Messung der Autokorrelationsfunktion erster oder höherer Ordnung mittels einer Matrix aus strahlformenden Einzelelementen derart erfolgt, dass eine örtliche Aufspaltung des Strahls in eine Strahl-Matrix aus konischen Teilstrahlen vorgenommen wird, wobei jeder Teilstrahl die räumlich integrierte Information über die von ihm durchstrahlte Teilfläche der Matrix reprä-sentiert, die Ortsauflösung somit durch die Matrixgeometrie bestimmt wird und dass das durch jeden Teilstrahl in einer bestimmten, auf eine Matrixkamera abgebildeten Ebene im Raum erzeugte Interferenzmuster eine Autokorrelationsfunktion erster Ordnung oder unter Ausnutzung nichtlinearer Wechselwirkungen in einem geeigneten Medium entsprechend höherer Ordnung liefert, so dass Kohärenzzeit oder Impulsdauer von einzelnen Laserimpulsen oder Folgen mehrerer Laserimpulse als Funktion des Ortes bestimmt werden können.

Nach einer bevorzugten Ausführungsform dieser Variante werden die Einzelelemente der strahlformenden Matrix aus mikrooptischen Komponenten wie Dünnschicht-Mikro-Axicons gebildet, welche sich vorteilhaft durch eine geringe Dispersion sowie geringe Absorption und damit geringe Zerstörempfindlichkeit gegenüber hohen Leistungen auszeichnen. Je nach Ausführungsform ist der Einfluss von Nachbarelementen in Abhängigkeit von der Impulsdauer zu berücksichtigen (Änderung der zur Interferenz beitragenden Winkelanteile infolge von Laufzeitunterschieden bei sehr kurzen Impulsen). Dieser Einfluss kann auch ausgenutzt werden, um zusätzliche Informationen über die Impulseigenschaften zu gewinnen.

In einer weiteren Ausführungsform können hochreflektierende Mikro-Axicons in geeigneter Anordnung verwendet werden, mit denen sich dispersive Effekte noch besser vermeiden lassen.

In einer weiteren Ausführungsform sind die Einzelelemente der strahlformenden Matrix derart gestaltet, dass die konischen Teilstrahlen gegenüber der optischen Achse derart kleine Winkel bilden, dass die Längen der Interferenzzonen auf der jeweiligen optischen Achse, in axialer Richtung gemessen, mindestens das Zehnfache des Durchmessers der Einzelelemente betragen.

In einer weiteren Ausführungsform wird eine CCD-Matrix-Kamera mit integriertem nichtlinear-optischem Medium direkt ohne Abbildungssystem in die Ebene des zu analysierenden Interferenzmusters gebracht. Auf diese Weise entfallen Abberrationen des Abbildungssystems.

In einer weiteren Ausführungsform werden Einzelelemente mit unterschiedlichen Durchmessern in einer inhomogenen Matrix integriert, um eine ortsvariable Auflösung und damit die Möglichkeit der Adaption an spezielle Intensitätsprofile mit örtlich extrem unterschiedlichem Anstieg der Intensität zu erzielen. Mittels geeigneter Bildverarbeitungssoftware kann weiterhin aus der Lage der Schwerpunkte der matrixförmigen Interferenzmuster (Verzerrung der gegenüber einer Referenzmatrix, die einer Beleuchtung mit einer ebenen Wellenfront entspricht) eine zusätzliche zeitintegrierte Information über die örtliche Verteilung der Wellenfrontkrümmung gewonnen werden. Dieses Verfahren ist als Shack-Hartmann-Methode bekannt, ebenso sind die erforderlichen Algorithmen zur Bildauswertung Stand der Technik. Da der Durchmesser der Einzelelemente der Matrix einerseits die Ortsauflösung mitbestimmt, andererseits in Richtung kleinerer Durchmesser die Beugungseffekte und ebenso die Anforderungen an die Ortsauflösung von Abbildungssystem und Matrixkamera zunehmen, ist eine Parameteroptimierung je nach Zeitskala und Spektralbereich notwendig. Vorzugsweise wählt man die Periode der Einzelelemente der strahlformenden Matrix groß gegen die Laserwellenlänge. Wird als nichtlineare Frequenzkonversion zur Realisierung der Autokorrelation zweiter Ordnung die SHG verwendet, muss mit einem spektral selektiven Element (Filter, Gitter) das SHG-Signal von der Grundwelle getrennt werden. Da bei Prozessen höherer Ordnung die Signal-intensität nichtlinear von der Laserintensität abhängt, ist die Verwendung einer Kamera mit einem hohen Dynamikbereich und nichtlinearer, vorzugsweise logarithmischer, Charakteristik zweckmässig, da so Übersteuerung vermieden und damit über das gesamte Strahlprofil gemessen werden kann.

Das Verfahren in einer zweiten Variante ist dadurch gekennzeichnet, dass zur orts- und zeitaufgelösten Charakterisierung von ultrakurzen Laserimpulsen eine nicht-kollineare Messung der Autokorrelationsfunktion erster oder höherer Ordnung oder simultan erster und höherer Ordnung mittels eines strahlformenden Einzelelements, dessen transversale Abmessungen hinreichend klein gegen den Strahldurchmesser sind, derart erfolgt, dass eine schrittweise örtliche Abtastung des Strahls durch Änderung der Position des Einzelelements bezüglich des Strahlprofils erzielt wird, und dass das in jeder Position in einer bestimmten, auf eine Matrixkamera abgebildeten Ebene im Raum durch den Teilstrahl erzeugte Interferenzmuster eine Autokorrelationsfunktion erster Ordnung oder unter Ausnutzung nichtlinearer Wechselwirkungen in einem geeigneten Medium entsprechend höherer Ordnung liefert, so dass unter der Voraussetzung hinreichend kleiner Schwankungen Kohärenzzeit oder Impulsdauer von repetierten Laserimpulsen als Funktion des Ortes bestimmt werden können.

Im Gegensatz zur Matrixanordnung werden bei Verwendung von nur einem Einzelelement in der scannenden Anordnung (senkrecht zur optischen Achse) eventuelle störende Einflüsse von Nachbarelementen vermieden.

In einer Ausführungsform dieser Variante wird als Einzelelement eine mikrooptische Komponente wie ein Dünnschicht-Mikro-Axicon, verwendet, welches sich vorteilhaft durch eine geringe Dispersion sowie geringe Absorption und damit geringe Zerstörempfindlichkeit gegenüber hohen Leistungen auszeichnet.

In einer weiteren Ausführungsform wird eine reflektierende Mikrooptik in Reflexionsanordnung verwendet, so dass dispersive Effekte eliminiert werden.

In einer weiteren Ausführungsform ist das Einzelelement derart gestaltet, dass die konischen Teilstrahlen gegenüber der optischen Achse einen derart kleinen Winkel bilden, dass die Länge der Interferenzzone auf der optischen Achse, in axialer Richtung gemessen, mindestens das Zehnfache des Durchmessers des Einzelelements beträgt.

In einer weiteren Ausführungsform wird eine CCD-Matrix-Kamera mit integriertem nichtlinear-optischem Medium direkt ohne Abbildungssystem in die Ebene des zu analysierenden Interferenzmusters gebracht. Auf diese Weise entfallen Abberrationen des Abbildungssystems.

In einer weiteren Ausführungsform werden voneinander unabhängige Detektoren verwendet, die auch einzeln betrieben werden können.

In einer weiteren Ausführungsform werden einer Frequenztransformation in einem ersten nichtlinearen Medium eine oder mehrere Frequenztransformationen nachgeschaltet, die unter anderem auf der Anregung einer Fluoreszenz basieren, welche verglichen mit der Zeitkonstanten der Detektoren langsam abklingt und in einem gut detektierbaren Spektralbereich liegt.

In einer Ausführungsform sind die Einzelemente der strahlformenden Matrix direkt auf das nichtlineare Medium aufgebracht oder durch geeignete Strukturierung desselben erzeugt.

Die beschriebenen Anordnungen stellen bezüglich der Ortskoordinaten Vielkanal-Messsysteme dar, bei denen die Zahl der Kanäle durch die Zahl der Einzelelemente der strahlformenden Matrix festgelegt ist. Da das Verhältnis der Apertur der Einzelelemente zur Periode der Matrix neben der Beugung wesentlich die Verluste mitbestimmt, ist eine vollständige Ausnutzung der Gesamtfläche der Matrix durch einen hohen Füllfaktor günstig. Bei runden Einzelelementen in einer homogenen Matrix aus Einzelelementen gleicher Gestalt wird der höchste Füllfaktor durch eine hexagonale Anordnung realisiert.

Nachfolgend wird die Erfindung anhand konkreter Ausführungsbeispiele einer Anordnung zur orts- und zeitaufgelösten interferometrischen Charakterisierung von ultrakurzen Laserimpulsen näher dargestellt. Die einzige Figur zeigt die schematische Darstellung der Anordnung zur orts-und zeitaufgelösten interferometrischen Charakterisierung von ultrakurzen Laserimpulsen mit einem Verfahren gemäss Anspruch 1 und einem Verfahren gemäss Anspruch 7.

Ausführungsbeispiel 1

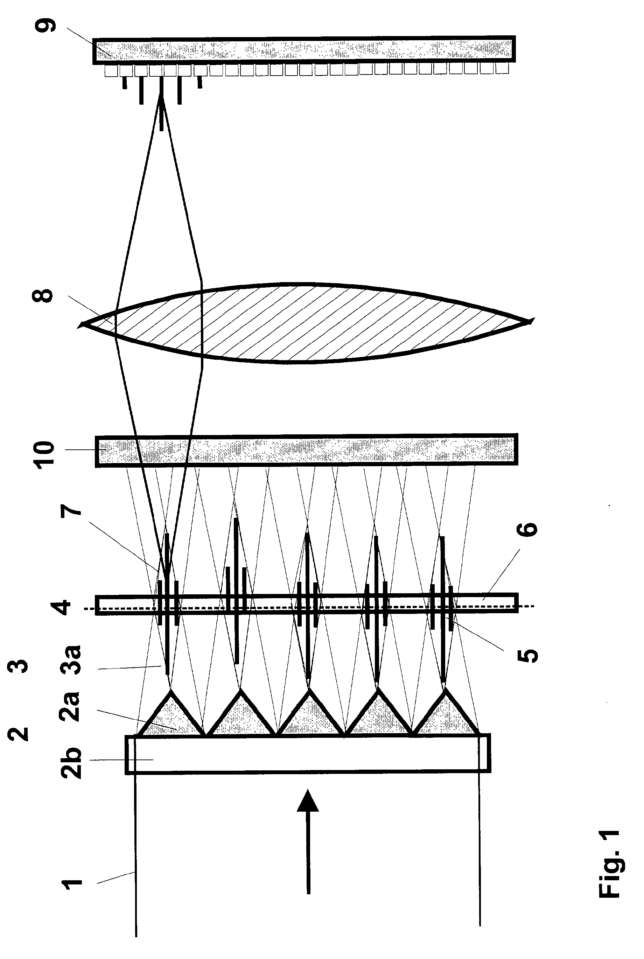

Ausführungsbeispiel 1 bezieht sich auf eine gemäss der Darstellung in der Fig. 1 ausgelegte Anordnung zur orts-und zeitaufgelösten Charakterisierung von ultrakurzen Laserimpulsen, die auf einer ortsaufgelösten nichtkolline-aren Messung der Autokorrelationsfunktion erster und/oder höherer Ordnung mittels einer Matrix aus strahlformenden Einzelelementen basiert. Das Beispiel verwendet als Lichtquelle den Strahl 1 eines Ti:Sa-Lasers mit einer Mitten-wellenlänge um 790 nm und einer Folgefrequenz von 1 kHz.

Als Einzelelemente 2a der strahlformenden Matrix 2 werden kreisförmige Mikro-Axicons aus $SiO_2$ in hexagonaler MatrixAnordnung auf einem dünnen planen Quarz-Substrat 2b mit einem minimalen Pitch (Periode) von 405 nm verwendet, welche mittels einer Dünnschichttechnik (maskenabgeschat-tete Vakuumbedampfung) auf das Quarz-Substrat 2b aufgebracht sind. Die Fläche der von den Einzelelementen 2a ausgefüllten strahlformenden Matrix 2 ist wesentlich größer als die typische Querschnittsfläche des Laserstrahls 1. Die Dickenprofile der Mikro-Axicons können jeweils durch eine zweidimensionale Gauß-Verteilung mit einer maximalen Dicke von 5.7 $\mu$m im Zentrum beschrieben werden. Die Matrix 2 aus strahlformenden Einzelelementen 2a erzeugt eine örtliche Aufspaltung des Strahls 1 in eine Strahl-Matrix 3 aus konischen Teilstrahlen 3a, bei der jeder Teilstrahl 3a die räumlich integrierte Information über die von ihm durchstrahlte Teilfläche der strahlformenden Matrix 2 repräsentiert und die Ortsauflösung somit durch die Matrixgeometrie bestimmt wird, während die jeweiligen Interferenzmuster 5 die Zeitinformation enthalten.

In die senkrecht zur optischen Achse stehende Ebene 4 wird in einer Entfernung, in der die Teilstrahlen 3a besonders gut auswertbare Interferenzmuster 5 liefern, ein nichtlinearer Kristall 6 aus BBO in einem geeigneten Winkel zur optischen Achse eingebracht, in dem die Interferenzmuster 5 über die Erzeugung der zweiten Harmonischen (SHG) in ein zum Quadrat der Laserintensität proportionales SHG-Signal 7 im UV-Bereich bei einer Wellenlänge um 395 nm umgewandelt werden, welches mit einem Abbildungssystem 8 aus Mikroskopobjektiv und Zoomobjektiv auf eine CCD-Matrixkamera 9 mit einer geeigneten Auflösung abgebildet wird.

Die Laserstrahlung (Grundwelle) wird mittels eines Glas-filters 10 geeigneter spektraler Transmissionskurve herausgefiltert und somit nur das zu detektierende SHG-Signal 7 aufgenommen. In der beschriebenen Geometrie treten nur sehr kleine Winkel gegenüber der optischen Achse auf (< 2°), was die Anordnung für nichtlineare Frequenztransformation besonders geeignet werden lässt.

Es ist zu beachten, dass bei zu kleinem Winkel die Zeitauflösung durch schwerer auswertbare große Ringabstände im Interferenzmuster beeinträchtigt werden kann.

Die beschriebene Geometrie gestattet die Charakterisierung von Impulslängen < 30 fs. Die Vergrößerung ist so gewählt, dass eine optimale Anpassung an die Pixelgröße erfolgt. Aus dem von der CCD-Matrixkamera 9 detektierten SHG-Intensitätsmuster 7 wird nach bekannten Algorithmen für nicht-kollineare Autokorrelatoren eine Autokorrelationsfunktion zweiter Ordnung extrahiert und so die Impulsdauer von einzelnen Laserimpulsen (bei Messung mittels elektronischem Gate der Kamera) oder Folgen mehrerer Laserimpulse (im integrierenden Betrieb der Kamera) als Funktion des Ortes bestimmt.

Eine simultane Detektion der Autokorrelationsfunktion erster und zweiter Ordnung erfolgt, indem der nichtlineare Kristall 6 nur einen Teilbereich (vorzugsweise die Hälfte der räumlichen Verteilung) abdeckt.

Ausführungsbeispiel 2

Ausführungsbeispiel 2 (ohne Abbildung) bezieht sich auf eine Anordnung zur orts- und zeitaufgelösten Charakterisierung von ultrakurzen Laserimpulsen, die auf einer ortsaufgelösten nicht-kollinearen Messung der Autokorrelationsfunktion erster oder höherer Ordnung mittels einer zum Ausführungsbeispiel 1 verwandten Anordnung basiert.

Anstelle einer simultan verarbeitenden Matrix wird hierbei nur ein strahlformendes Einzelelement eingesetzt, dessen transversale Abmessungen hinreichend klein gegen den Strahldurchmesser sind, und das den Laserstrahl schrittweise örtlich abtastet (scannendes Verfahren). Eventuelle störende Einflüsse von Nachbarelementen können damit ausgeschlossen werden. Charakterisiert werden können Impulszüge im repetierenden Betrieb, jedoch keine Einzelimpulse. Voraussetzung ist eine hinreichend gute Reproduzierbarkeit der Intensitätsprofile über den Ort von Impuls zu Impuls.

**Bezugszeichenliste**

1 Strahl
2 Strahlformende Matrix
2a Einzelelement
2b Substrat
3 Strahl-Matrix
3a Teilstrahl
4 Ebene
5 Interferenzmuster
6 Kristall
7 SHG-Signal
8 Abbildungssystem
9 CCD-Matrixkamera
10 Filter

**Patentansprüche**

1. Verfahren zur orts- und zeitaufgelösten interferometrischen Charakterisierung von ultrakurzen Laserimpulsen, wobei eine ortsaufgelöste nicht-kollineare Messung der Autokorrelationsfunktion erster oder höherer Ordnung mittels einer Matrix aus strahlformenden Einzelelementen derart vorgenommen wird, dass eine örtliche Aufspaltung des Strahls in eine Strahl-Matrix aus konischen Teilstrahlen erfolgt, wobei jeder Teilstrahl die räumlich integrierte Information über die von ihm durchstrahlte Teilfläche der Matrix repräsentiert, die Ortsauflösung somit durch die Matrixgeometrie bestimmt wird, und dass das durch jeden Teilstrahl in einer bestimmten, auf eine Matrixkamera abgebildeten Ebene im Raum erzeugte Interferenzmuster eine Autokorrelationsfunktion erster Ordnung oder unter Ausnutzung nichtlinearer Wechselwirkungen in einem geeigneten Medium entsprechend höherer Ordnung liefert, so dass Kohärenzzeit oder Impulsdauer von einzelnen Laserimpulsen oder Folgen mehrerer Laserimpulse als Funktion des Ortes bestimmt werden können.

2. Verfahren nach Anspruch 1, **dadurch gekennzeichnet, dass** die Einzelelemente der strahlformenden Matrix aus mikrooptischen Komponenten wie Dünnschicht-Mikro-Axicons gebildet werden.

3. Verfahren nach Anspruch 1, **dadurch gekennzeichnet, dass** die Einzelelemente der strahlformenden Matrix aus reflektierenden Mikro-Axicons oder Kombinationen aus Spiegeln und Arrays aus refraktiven nichtsphärischen Mikrolinsen in geeigneter Anordnung gebildet werden.

4. Verfahren nach Anspruch 1, **dadurch gekennzeichnet, dass** die konischen Teilstrahlen gegenüber der optischen Achse derart kleine Winkel bilden, dass die Längen der Interferenzzonen auf der jeweiligen optischen Achse, in axialer Richtung gemessen, mindestens das Zehnfache des Durchmessers der Einzelelemente betragen.

5. Verfahren nach Anspruch 1, **dadurch gekennzeichnet, dass** eine CCD-Matrix-Kamera mit integriertem nichtlinear-optischem Medium direkt ohne Abbildungssystem in die Ebene des zu analysierenden Interferenzmusters gebracht wird.

6. Verfahren nach Anspruch 1, **dadurch gekennzeichnet, dass** die Einzelelemente mit unterschiedlichen Durchmessern in einer inhomogenen Matrix integriert werden, um eine ortsvariable Auflösung und damit die Möglichkeit der Adaption an spezielle Intensitätsprofile mit örtlich extrem unterschiedlichem Anstieg der Intensität zu erzielen.

7. Verfahren nach Anspruch 1, **dadurch gekennzeichnet, dass** die Einzelelemente direkt auf das nichtlineare Medium aufgebracht oder durch geeignete Strukturierung desselben erzeugt werden.

8. Verfahren zur orts- und zeitaufgelösten Charakterisierung von ultrakurzen Laserimpulsen, wobei eine nicht-kollineare Messung der Autokorrelationsfunktion erster oder höherer Ordnung oder simultan erster und höherer Ordnung mittels eines strahlformenden Einzelelements, dessen transversale Abmessungen hinreichend klein gegen den Strahldurchmesser sind, derart erfolgt, dass eine schrittweise örtliche Abtastung des Strahls durch Änderung der Position des Einzelelements bezüglich des Strahlprofils erzielt wird, und dass das in jeder Position in einer bestimmten, auf eine Matrixkamera abgebildeten Ebene im Raum durch den Teilstrahl erzeugte Interferenzmuster eine Autokorrelationsfunktion erster Ordnung oder unter Ausnutzung nichtlinearer Wechselwirkungen in einem geeigneten Medium eine Autokorrelationsfunktion entsprechend höherer Ordnung liefert, so dass unter der Voraussetzung hinreichend kleiner Schwankungen Kohärenzzeit oder Impulsdauer von repetierenden Laserimpulsen als Funktion des Ortes bestimmt werden können.

9. Verfahren nach Anspruch 8, **dadurch gekennzeichnet, dass** als Einzelelement eine mikrooptische Komponente wie ein Dünnschicht-Mikro-Axicon verwendet wird.

10. Verfahren nach Anspruch 8, **dadurch gekennzeichnet, dass** eine hochreflektierende Mikrooptik in Reflexionsanordnung verwendet wird.

11. Verfahren nach Anspruch 8, **dadurch gekennzeichnet, dass** das Einzelelement derart gestaltet wird, dass die konischen Teilstrahlen gegenüber der optischen Achse einen derart kleinen Winkel bilden, dass die Länge der Interferenzzone auf der optischen Achse, in axialer Richtung gemessen, mindestens das Zehnfache des Durchmessers des Einzelelements beträgt.

12. Verfahren nach Anspruch 8, **dadurch gekenn-**

**zeichnet, dass** eine CCD-Matrix-Kamera mit integriertem nichtlinear-optischem Medium direkt ohne Abbildungs-system in die Ebene des zu analysierenden Interferenzmusters gebracht wird.

13. Anordnung zur orts- und zeitaufgelösten interferometrischen Charakterisierung von ultrakurzen Laserimpulsen, **dadurch gekennzeichnet, dass** ein Vielkanal-Messsystem vorgesehen ist, bei dem die Zahl der Kanäle durch die Zahl von Einzelelementen (2a) einer strahlformenden Matrix (2) festgelegt ist und die Detektoren unabhängig voneinander betrieben werden.

14. Anordnung nach Anspruch 13, **dadurch gekennzeichnet, dass** die Matrix (2) aus strahlformenden Einzelelementen (2a) wie Mikro-Axicons eine Fläche aufweist, die wesentlich grösser ist als die typische Querschnittsfläche des Laserstrahls (1), und dass in der Ebene (4) der Interferenzmuster (5) der örtlich aufgespaltenen Teil-Strahlen (3a) in einem geeigneten Winkel zur optischen Achse ein nichtlinearer optischer Kristall (6) angeordnet ist, in dem die Interferenzmuster (5) über die Erzeugung der zweiten Harmonischen in ein zum Quadrat der Laserintensität proportionales SHG-Signal (7) umgewandelt werden, wobei ein Filter (10) geeigneter spektraler Transmissionskurve zur Detektion des SHG-Signals (7) und ein Abbildungssystem (8) und eine nachgeordnete CCD-Matrixkamera (9) zur Auswertung vorgesehen sind.

**Fig. 1**